# EUROPEAN PATENT SPECIFICATION

(11) **EP 0 395 180 B1**
(45) Date of publication and mention of the grant of the patent: **22.06.1994**
(21) Application number: 90201062.8
(22) Date of filing: 27.04.1990
(51) Int. Cl.: A01D 34/66

(54) **A mowing machine**
Mähmaschine
Faucheuse

(30) Priority: 28.04.1989 NL 8901072
(43) Date of publication of application: 31.10.1990
(73) Proprietor: C. van der Lely N.V., NL-3155 PD Maasland (NL)
(72) Inventor: Van der Lely, Cornelis, Zug. (CH)
(74) Representative: Mulder, Herman

(56) References cited:
- EP-A- 0 086 171
- EP-A- 0 235 850
- EP-A- 0 260 750
- EP-A- 0 267 659
- EP-A- 0 304 584
- DE-A- 2 007 716
- NL-A- 7 605 371
- NL-A- 7 804 724
- NL-A- 8 403 316
- US-A- 2 625 784

## Description

The present invention relates to a mowing machine comprising a cutter bar constituted by drive elements, each of which being provided with a gear box, and, therebetween, by spacer elements, each of which being provided with a front portion and a rear portion, the mowing machine further comprising mowing members which are fitted above the drive elements and drivable about upwardly extending shafts, said drive elements and spacer elements having hollow portions, in a cavity of which the drive of the mowing members is accommodated, and being interconnected by means of a tensile rod, which is arranged approximately in the centre of the cutter bar, in the spacer elements between the front and rear portion and outside the drive elements and spacer elements.

Such a mowing machine is described in EP-A-0235850. This known mowing machine is provided with spacer elements constituted by two single spacers as specifically shown in the figures 17 and 19 of said European patent application. As the contact surface of these spacers with the drive elements is relatively small, the stability of the cutter bar construction is rather limited.

The invention has for its object to provide such a design of specifically the spacer elements that they can be produced in a relatively simple manner and that the stability of the cutter bar construction will be improved. At the same time a certain saving in material, realized in the known spacer elements has not to be undone.

According to the invention, the above-defined mowing machine is characterized in that a spacer element is constituted by transverse sections and, therebetween and rigidly connected thereto, said front and rear portion. By means of the transverse sections the contact surface of the drive elements with the spacer elements is such that a more stable cutter bar construction is obtained. More material can further be saved when a drive element too is constituted by transverse sections and, therebetween and rigidly connected thereto, a front portion formed by said gear box and a further rear portion. Particularly a favourable embodiment is obtained when the gear box and the further rear portion of a drive element on the one hand and the front and rear portion of a spacer element on the other hand are respectively linked to one piece by the transverse sections, while the tensile rod is led through apertures in the transverse sections between the front and rear portions of the drive elements and the spacer elements. Despite the fact that the tensile rod extends approximately through the centre of the cutter bar and thereby optimally intercouples the elements constituting same, the tensile rod is not covered or sealed from the environment over a relatively large portion. Such partly open elements can be manufactured advantageously and also provide as already been mentioned, a saving in material. In order to keep the drive elements and the spacer elements in alignment, in accordance with the invention a dowel is provided between each two thereof. In accordance with the invention, the above-defined drive elements and spacer elements can also advantageously be made of cast iron. In addition, the cutter bar in accordance with the invention may be provided with spacer elements constituted by two box-like beams, between which the tensile rod is arranged; the said box-like beams may be open at both ends.

Between the drive of the mowing members there may be arranged a torsion rod, the length of which corresponds to approximately the spacing therebetween. When a cutter bar is assembled from drive elements and spacer elements, then, in this embodiment, the torsion rod will have a length corresponding to approximately that of the spacer elements.

In a concrete embodiment, the drive includes a drive shaft accommodated in the cutter bar; the drive shaft, preferably, has an angular cross-section and may consist of a plurality of sections. However, the drive shaft need not have an angular cross-section along its entire length. The drive shaft in the gear box may have a circular cross-section, while the drive shaft between two gear boxes may have a square cross-section. Preferably, the square shaft is made of spring steel and shows a resilience upon torsion.

In an advantageous embodiment, the upwardly extending shaft, about which a mowing member is provided rotatably, may be fitted rigidly in the gear box of the drive elements constituting part of the cutter bar. In this embodiment, preferably near the lower end of the upwardly extending shaft, an aperture is made in the shaft or in the shaft support, through which aperture extends the drive shaft passing through the cutter bar.

The above-described mowing machine can be provided with coupling points for connection thereof to the coupling points of a three-point lifting hitch, In addition, the mowing machine can be drivable from the power take-off shaft of a tractor.

For a better understanding of the invention and to show how the same may be carried into effect, reference will now be made, by way of example, to some embodiments shown in the accompanying drawings, wherein:
Figure 1 is a schematic plan view of a mowing machine of the invention, connected to a tracor;
Figure 2 is, to an enlarged scale, a more detailed view of the schematic plan view of Figure 1;
Figure 3 is a side view of the detailed representation of Figure 2;
Figure 4 is a partly cross-sectional view taken on the line IV - IV in Figure 2;
Figure 5 is a longitudinal cross-sectional view taken on the line V - V in Figure 2;
Figure 6 is a partly cross-sectional view of a second embodiment of a mowing machine, and
Figure 7 is a partly longitudinal cross-sectional view of the second embodiment of the mowing machine.

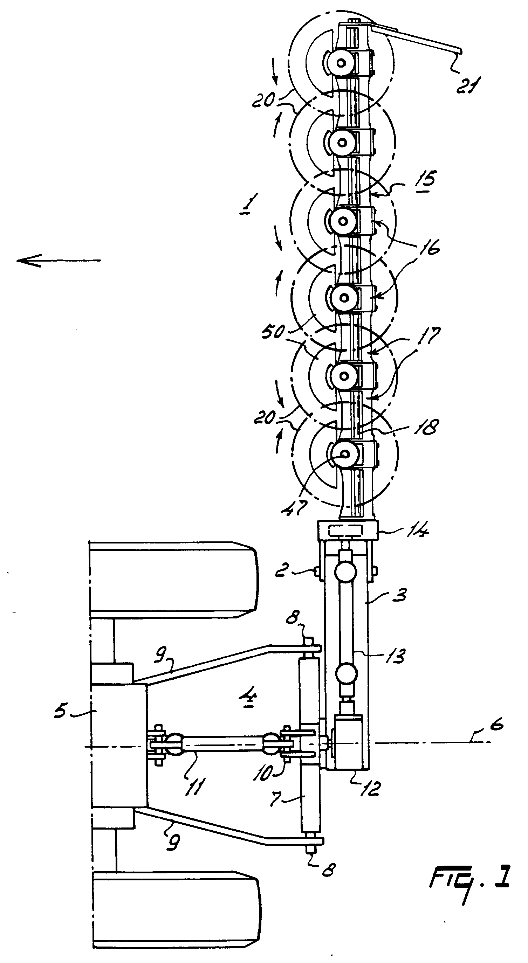

The mowing machine 1 shown in the drawings is connected, capably of pivoting about an approximately horizontal pivot pin 2 extending in the direction of operative travel, to a carrier arm 3, by means of which the mowing machine 1 can be coupled to the three-point lifting hitch 4 of a tractor or a similar vehicle 5, as is shown in Figure 1. In addition, the carrier arm 3 is connected, capably of pivoting about an approximately horizontal pivot pin extending in the direction of operative travel and of which the centre line is denoted in Figure 1 by reference numeral 6, to a lower carrier beam of a trestle 7. At its bottom side, the trestle 7 is connected via coupling elements 8 to the lifting arms 9 and, at its top side, via a coupling element 10 to the top rod 11 of the three-point lifting hitch 4. The drive of the mowing machine is effected from the power take-off shaft of the tractor 5 via various transmission members accommodated in the gear box 12 connected to the carrier arm 3, the intermediate shaft 13 provided with universal joints and various transmission members accommodated in the box 14 connected to the mowing machine 1.

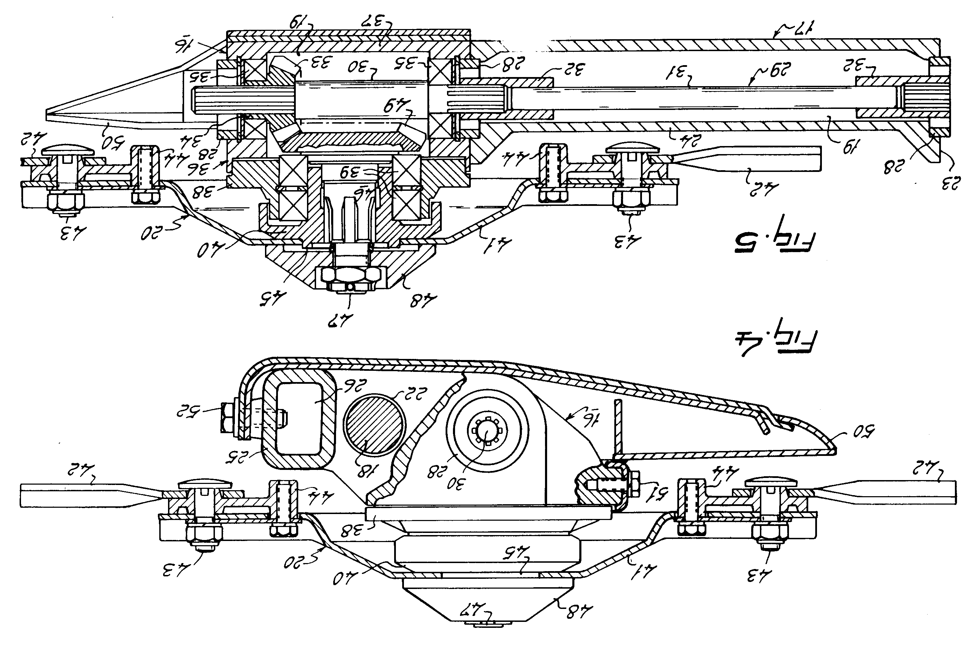

The mowing machine 1 comprises a cutter bar 15 which is assembled from drive elements 16 and spacer elements 17. Preferably, the said elements are arranged alternately and are interconnected as well as connected to the box 14 via a tensile rod 18. The elements 16, 17 are furthermore provided with a cavity 19, which cavity accommodates the drive of mowing members 20 which are fitted above the drive elements 16 and are drivable about upwardly extending shafts (see Figures 4 and 5). Preferably, the mowing members 20 are driven alternately in mutually opposite directions. For the sake of simplicity, the mowing members 20 themselves are not shown in Figure 1, but only the orbits described by the tips of their knives. In addition, the mowing machine shown here is provided with a crop guide element 21.

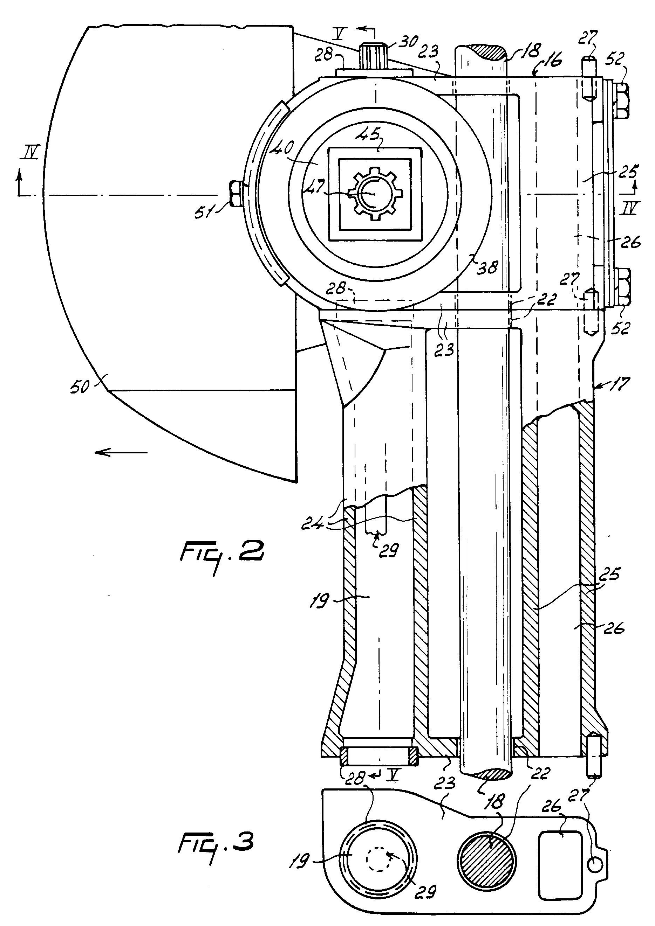

As is apparent from Figures 2 and 3, the tensile rod 18 is arranged approximately in the centre of the cutter bar 15. The tensile rod 18 extends through apertures 22 provided in transverse sections 23 arranged at or near the ends of the elements 16, 17, which ends are located in the longitudinal direction of the cutter bar 15. The elements 16, 17 comprise a front portion 24 having the cavity 19 and a rear portion 25 having, in the embodiment described here, a further cavity 26. As is apparent from Figures 2 and 3, the cavity 19 has a circular cross-section, whereas that of the cavity 26 is approximately rectangular; however, the shape of these cross-sections may be chosen differently. The tensile rod 18 is arranged outside the hollow elements 16, 17 and, more in particular, between the front and rear hollow portions 24 and 25, respectively. Seen in a horizontal cross-section as it is shown in part in Figure 2, the space accommodating the tensile rod 18 is confined by the front hollow portion 24, the rear hollow portion 25 and the transverse sections 23. At the upper and lower sides there is no confinement.

The front hollow portions 24 of the drive elements 16 constitute a gear box, whereas the rear hollow portions 25 thereof constitute a box-like beam. The hollow portions 24, 25 of a spacer element 17 both constitute a box-like beam. The box-like beams are open at both ends. The front hollow portions 24 of the drive elements 16 have apertures for the drive means extending through the cutter bar 15 and for the mowing members 20 which are drivable about the upwardly extending shafts.

In the transverse sections 23 of the drive elements 16 and of the spacer elements 17, bores are provided for a dowel 27 and for a ring 28, by which means the elements 16, 17 are fixed rigidly relative to each other. The elements 16, 17 are of such a design that they can advantageously be made of cast iron.

The drive for the mowing members 20 extends through the front hollow portions 24 of the drive elements 16 and those of the spacer elements 17. Between the drive of the mowing members 20 in the drive elements 16 there may be arranged torsion rods, the length of which corresponds to approximately the spacing therebetween. The drive force is transferred via the torsion rods to the consecutive mowing members. In a preferred embodiment, the drive includes a drive shaft 29 which extends through the cutter bar. In this situation, the drive shaft 29 is assembled from sections. In the embodiments shown, the sections 30 of the drive shaft 29 in the drive elements 16 have a circular cross-section and the sections 31 of the drive shaft between two drive elements 16 have an angular, preferably square, cross-section. Preferably, the angular drive shaft sections are made of spring steel and show a resilience upon torsion. Of course, in addition to the embodiment shown, many variants thereof are possible, while it is also possible to use an integral drive shaft having a rectangular cross-section.

The shaft sections 30 and 31 are interconnected via a bushing 32, of which the portion around the shaft section 30 having the circular cross-section engages thereon by means of a spline connection, while the portion around the shaft section 31 has an angular bore therefor. Near its one end, the shaft section 30 is surrounded by a bevel gearwheel 33 having a sleeve-shaped portion 34. With the aid of bearings 35 provided around the sleeve-shaped portion 34 at the one end of the shaft section 30 as well as around the other end thereof, the shaft section 30 cum bevel gearwheel 33 is supported capably of rotation in a housing 36. The housing 36 has a lower housing portion 37, on top of which there is arranged a retaining ring 38. The inner surface of the retaining ring 38 encloses two superposed bearings 39, of which the inner rings support the outer surface of the lower portion of the hub 40. The upper portion of the hub 40 flares above the top one of the bearings 39 and at its upper side serves as a supporting face for the annular knife holder 41 of the mowing member 20. On the knife holder 41 there are arranged diametrically opposite each other two mowing knives 42. The mowing knives 42 are freely pivotable about pins 43, which movement is bounded by a stop 44. The inner surface of the upper inner portion of the knife holder 41 encloses a square hole which is arranged with a tight fit around the outer circumference of an, in plan view, square raised portion 45 that is provided on the upper surface of the hub 40.

The shaft 46 has a portion that is located within the hub 40 and is provided with axial splines to co-operate with axial splines on the inner surface thereof. Above its portion occupied by the splines, the shaft 46 merges into a shaft portion 47 which is provided with screw-thread at its outer circumference. Around the shaft portion 47 there is arranged a pressure member 48, which member presses the upper side of the central portion of the knife holder 41. The pressure member 48 has a recess accommodating the nut, by means of which the mowing member 20 is secured around the shaft 46. At its lower end, the shaft 46 is provided with a bevel gearwheel 49 to co-operate with the bevel gearwheel 33. The drive force is transferred from the drive shaft 29 via the gearwheels 33, 34 to the mowing member 20. In addition, below the drive elements there are arranged mowing shoes 50. At their leading sides, the mowing shoes are secured to the drive elements 16 by means of bolts 51 and, at their rear sides, by bolts 52.

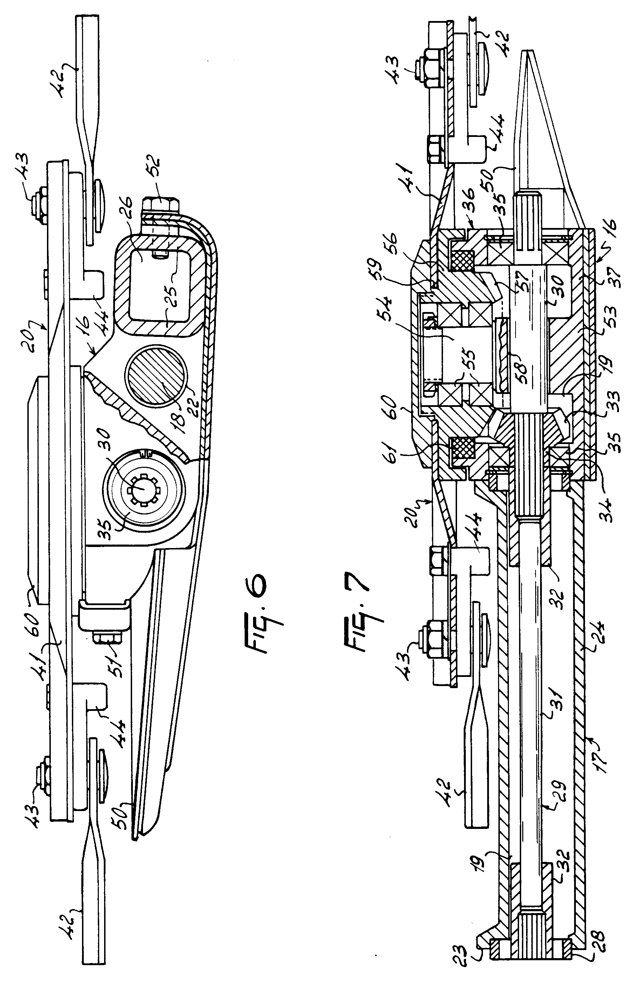

In the embodiment shown in Figures 6 and 7, in the lower housing portion 37 there is disposed rigidly via a shaft support 53 an upwardly extending shaft 54. The mowing member 20 is rotatable about the fixed shaft 54 via bearings 55. For that purpose, the mowing member 20 is provided, in addition to the afore-mentioned annular knife holder 41, with an annular element 56 which is arranged capably of rotation about the bearings 55, the lower side of which annular element 56 constitutes a bevel gearwheel 57 to co-operate with the bevel gearwheel 33 on the drive shaft 29. The drive shaft 29 extends through an aperture 58 in the lower end of the shaft 54 or in the shaft support 53. In this case, too, the inner surface of the upper inner portion of the knife holder 41 encloses a square hole which is arranged with a tight fit around the outer circumference of an, in plan view, square raised portion 59 that is provided on the upper surface of the annular element 56. Furthermore, the mowing member is covered by a pressure plate 60 which is secured around an upper edge of the annular element 56. In addition, a seal 61 is provided between the annular element 56 and the housing 36. It should furthermore be noted that the bearings 35, 39 and 55 may either be of the sealing type or be combined with separate sealing elements.

## Claims

1. A mowing machine (1) comprising a cutter bar (15) constituted by drive elements (16), each of which being provided with a gear box, and, therebetween, by spacer elements (17), each of which being provided with a front portion and a rear portion, the mowing machine further comprising mowing members (20) which are fitted above the drive elements (16) and drivable about upwardly extending shafts (46), said drive elements (16) and spacer elements (17) having hollow portions, in a cavity (19) of which the drive of the mowing members (20) is accommodated, and being interconnected by means of a tensile rod (18), which is arranged approximately in the centre of the cutter bar (15), in the spacer elements (17) between the front and rear portions and outside the drive elements (16) and spacer elements (17), characterized in that a spacer element (17) is constituted by transverse sections (23) and, therebetween and rigidly connected thereto, said front and rear portion.

2. A mowing machine (1) as claimed in claim 1, characterized in that a drive element (16) is constituted by transverse sections (23) and, therebetween and rigidly connected thereto, a front portion formed by said gear box and a further rear portion.

3. A mowing machine (1) as claimed in claim 2, characterized in that the gear box and the further rear portion of a drive element (16) on the one hand and the front and rear portion of a spacer element (17) on the other hand and respectively linked to one piece by the transverse sections (23), while the tensile rod (18) is led through apertures (22) in the transverse sections (23) between the front and rear portions of the drive elements (16) and the spacer elements (17).

4. A mowing machine (1) as claimed in any one of the preceding claims, characterized in that a dowel (27) is provided between a drive element (16) and spacer element (17).

5. A mowing machine (1) as claimed in any one of the preceding claims, characterized in that the drive elements (16)and the spacer elements (17) are made of cast iron.

6. A mowing machine (1) as claimed any one of the preceding claims, characterized in that the gear box accommodates a bevel gear drive.

7. A mowing machine (1) as claimed in any one of the preceding claims, characterized in that a spacer element (17) comprises two box-like beams, between which the tensile rod (18) is arranged.

8. A mowing machine (1) as claimed in claim 7, characterized in that the box-like beams are open at both ends.

9. A mowing machine (1) as claimed in any one of the preceding claims, characterized in that between the drive of two mowing members (20) there is arranged a torsion rod (31), the length of which corresponds to approximately the spacing therebetween.

10. A mowing machine (1) as claimed in any one of the preceding claims, characterized in that the drive includes a drive shaft (29) accommodated in the cutter bar (15).

11. A mowing machine (1) as claimed in claim 10, characterized in that the drive shaft (29) has an angular cross-section and consists of a plurality of sections.

12. A mowing machine (1) as claimed in any one of claim 10 or 11, characterized in that the drive shaft (30) in the gear box has a circular cross-section.

13. A mowing machine (1) as claimed in claim 12, characterized in that the drive shaft (31) between two gear boxes has a square cross-section.

14. A mowing machine (1) as claimed in claim 13, characterized in that the square shaft shows a resilience upon torsion and is preferably made of spring steel.

15. A mowing machine (1) as claimed in any one of the preceding claims, characterized in that the upwardly extending shaft, about which a mowing member (20) is provided rotatably, is fitted rigidly in the gear box of the drive elements (16) constituting part of the cutter bar (15).

16. A mowing machine (1) as claimed in claim 15, characterized in that, near the lower end of the upwardly extending shaft, an aperture (58) is made in the shaft (54) or in the shaft support (53), through which aperture (58) extends the drive shaft (29) passing through the cutter bar (15).

## Patentansprüche

1. Mähmaschine (1) mit einem Mähbalken (15), der durch Antriebselemente (16) gebildet ist, die jeweils mit einem Getriebegehäuse versehen sind, sowie durch dazwischenliegende Distanzelemente (17), die jeweils einen vorderen und einen hinteren Teil aufweisen, wobei die Mähmaschine ferner mit Mähgliedern (20) versehen ist, die über den Antriebselementen (16) angeordnet und um die Achsen von aufwärts gerichteten Wellen (46) oder Achsen anzutreiben sind, und wobei die Antriebselemente (16) und die Distanzelemente (17) hohle Teile mit einer Vertiefung (19) zur Aufnahme des Antriebes der Mähglieder (20) aufweisen und mittels eines Zugankers (18) verbunden sind, der etwa in der Mitte des Mähbalkens (15) angeordnet ist und in den Distanzelementen (17) zwischen deren vorderen und hinteren Teilen sowie außerhalb der Distanzelemente (17) und der Antriebselemente (16) angeordnet ist,
dadurch gekennzeichnet, daß ein Distanzelement (17) durch quer verlaufende Abschnitte (23) und durch den dazwischenliegenden und starr mit ihnen verbundenen vorderen und hinteren Teil gebildet ist.

2. Mähmaschine (1) nach Anspruch 1,
dadurch gekennzeichnet, daß ein Antriebselement (16) aus quer verlaufenden Abschnitten (23) und einem dazwischenliegenden und starr mit ihnen verbundenen vorderen Teil, der durch das Getriebegehäuse gebildet ist, sowie einem weiteren, hinteren Teil besteht.

3. Mähmaschine (1) nach Anspruch 2,
dadurch gekennzeichnet, daß das Getriebegehäuse und der weitere hintere Teil eines Antriebselementes (16) einerseits und der vordere und hintere Teil eines Distanzelementes (17) andererseits durch die quer verlaufenden Abschnitte (23) jeweils zu einem Bauteil zusammengefügt sind, wobei der Zuganker (18) durch Öffnungen (22) in den quer verlaufenden Abschnitten (23) zwischen den vorderen und hinteren Teilen der Antriebselemente (16) und der Distanzelemente (17) hindurchgeführt ist.

4. Mähmaschine (1) nach einem der vorhergehenden Ansprüche,
dadurch gekennzeichnet, daß zwischen einem Antriebselement (16) und einem Distanzelement (17) ein Haltezapfen (27) vorgesehen ist.

5. Mähmaschine (1) nach einem der vorhergehenden Ansprüche,
dadurch gekennzeichnet, daß die Antriebselemente (16) und die Distanzelemente (17) aus Gußeisen hergestellt sind.

6. Mähmaschine (1) nach einem der vorhergehenden Ansprüche,
dadurch gekennzeichnet, daß das Getriebegehäuse ein Kegelradgetriebe enthält.

7. Mähmaschine (1) nach einem der vorhergehenden Ansprüche,
dadurch gekennzeichnet, daß ein Distanzelement (17) zwei Hohlkörper aufweist, zwischen denen der Zuganker (18) angeordnet ist.

8. Mähmaschine (1) nach Anspruch 7,
dadurch gekennzeichnet, daß die Hohlkörper an beiden Enden offen sind.

9. Mähmaschine (1) nach einem der vorhergehenden Ansprüche,
dadurch gekennzeichnet, daß zwischen dem Antrieb von zwei Mähgliedern (20) ein Torsionsstab (31) angeordnet ist, dessen Länge etwa dem Abstand zwischen den Mähgliedern entspricht.

10. Mähmaschine (1) nach einem der vorhergehenden Ansprüche,
dadurch gekennzeichnet, daß der Antrieb eine in dem Mähbalken (15) angeordnete Antriebswelle (29) aufweist.

11. Mähmaschine (1) nach Anspruch 10,
dadurch gekennzeichnet, daß die Antriebswelle (29) einen eckigen Querschnitt hat und aus mehreren Abschnitten besteht.

12. Mähmaschine (1) nach den Ansprüchen 10 oder 11,
dadurch gekennzeichnet, daß die Antriebswelle (30) in dem Getriebegehäuse einen kreisrunden Querschnitt hat.

13. Mähmaschine (1) nach Anspruch 12,
dadurch gekennzeichnet, daß die Antriebswelle (31) zwischen zwei Getriebegehäusen einen quadratischen Querschnitt hat.

14. Mähmaschine (1) nach Anspruch 13,
dadurch gekennzeichnet, daß die Welle mit quadratischem Querschnitt drehelastisch ist und vorzugsweise aus Federstahl besteht.

15. Mähmaschine (1) nach einem der vorhergehenden Ansprüche,
dadurch gekennzeichnet, daß die aufwärts gerichtete Achse, um die ein Mähglied (20) drehbar ist, in dem Getriebegehäuse des einen Teil des Mähbalkens (15) bildenden Antriebselementes (16) starr befestigt ist.

16. Mähmaschine (1) nach Anspruch 15,
dadurch gekennzeichnet, daß nahe dem unteren Ende der aufwärts gerichteten Achse eine Öffnung (58) in der Achse (54) oder in der Achsabstützung (53) vorgesehen ist, durch welche die durch den Mähbalken (15) verlaufende Antriebswelle (29) hindurchgeführt ist.

## Revendications

1. Machine faucheuse (1) comprenant une barre de coupe (15) constituée par des éléments d'entraînement (16), chacun desquels est muni d'une boîte d'engrenages, et, entre ceux-ci, par des éléments d'espacement (17) dont chacun est muni d'une partie antérieure et d'une partie postérieure, la machine faucheuse comprenant en outre des organes faucheurs (20) qui sont montés au dessus des éléments d'entraînement (16) et peuvent être entraînés autour d'arbres (46) s'étendant vers le haut, lesdits éléments d'entraînement (16) et éléments d'espacement (17) ayant des parties creuses dans une cavité (19) desquelles est logé l'entraînement des organes faucheurs (20) et étant interconnectés au moyen d'un tirant (18) qui est disposé approximativement au centre de la barre de coupe (15) dans les éléments d'espacement (17) entre les parties antérieures et postérieures et à l'extérieur des éléments d'entraînement (16) et des éléments d'espacement (17),
**caractérisée** en ce qu'un élément d'espacement (17) est constitué par des sections transversales (23) et, entre celles-ci et reliées à elles de manière rigide, lesdites parties antérieure et postérieure.

2. Machine faucheuse (1) selon la revendication 1, caractérisée en ce qu'un élément d'entraînement (16) est constitué par des sections transversales (23) et, entre celles-ci et reliées à elles de manière rigide, une partie antérieure formée par ladite boîte d'engrenages et une autre partie postérieure.

3. Machine faucheuse (1) selon la revendication 2, caractérisée en ce que la boîte d'engrenages et l'autre partie postérieure d'un élément d'entraînement (16), d'une part, et les parties antérieure et postérieure d'un élément d'espacement (17), d'autre part, sont jointes en une seule pièce par les sections transversales (23), tandis que le tirant (18) traverse des ouvertures (22) dans les sections transversales (23) entre les parties antérieures et postérieures des éléments d'entraînement (16) et des éléments d'espacement (17).

4. Machine faucheuse (1) selon l'une quelconque des revendications précédentes, caractérisée en ce qu'un goujon (27) est prévu entre un élément d'entraînement (16) et un élément d'espacement (17).

5. Machine faucheuse (1) selon l'une quelconque des revendications précédentes, caractérisée en ce que les éléments d'entraînement (16) et les éléments d'espacement (17) sont en fonte moulée.

6. Machine faucheuse (1) selon l'une quelconque des revendications précédentes, caractérisée en ce que la boîte d'engrenages contient une transmission à pignons coniques.

7. Machine faucheuse (1) selon l'une quelconque des revendications précédentes, caractérisée en ce qu'un élément d'espacement (17) comprend deux poutres en caisson, entre lesquelles est disposé le tirant (18).

8. Machine faucheuse (1) selon la revendication 7, caractérisée en ce que les poutres en caisson sont ouvertes aux deux extrémités.

9. Machine faucheuse (1) selon l'une quelconque des revendications précédentes, caractérisée en ce qu'une barre de torsion (31) est disposée entre les entraînements de deux organes faucheurs (20), la longueur de cette barre correspondant approximativement à l'espacement entre ces organes.

10. Machine faucheuse (1) selon l'une quelconque des revendications précédentes, caractérisée en ce que l'entraînement comporte un arbre d'entraînement (29) logé dans la barre de coupe (15).

11. Machine faucheuse (1) selon la revendication 10, caractérisée en ce que l'arbre d'entraînement (29) a une section transversale anguleuse et se compose d'une pluralité de sections.

12. Machine faucheuse (1) selon l'une ou l'autre des revendications 10 ou 11, caractérisée en ce que l'arbre d'entraînement (30) dans la boîte d'engrenages a une section transversale circulaire.

13. Machine faucheuse (1) selon la revendication 12, caractérisée en ce que l'arbre d'entraînement (31) entre deux boîtes d'engrenages a une section transversale carrée.

14. Machine faucheuse (1) selon la revendication 13, caractérisée en ce que l'arbre carré présente de l'élasticité à la torsion et est fait, de préférence, en acier à ressort.

15. Machine faucheuse (1) selon l'une quelconque des revendications précédentes, caractérisée en ce que l'arbre s'étendant vers le haut, autour duquel un organe faucheur (20) est prévu de manière rotative, est monté de manière rigide dans la boîte d'engrenages des éléments d'entraînement (16) constituant une partie de la barre de coupe (15).

16. Machine faucheuse (1) selon la revendication 15, caractérisée en ce qu'une ouverture (58) est ménagée, près de l'extrémité inférieure de l'arbre s'étendant vers le haut, dans l'arbre (54) ou dans le support (53) de l'arbre, à travers laquelle ouverture (58) s'étend l'arbre d'entraînement (29) passant dans la barre de coupe (15).
